# EUROPEAN PATENT SPECIFICATION

(11) **EP 0 904 198 B1**
(45) Date of publication and mention of the grant of the patent: **17.11.2004**
(21) Application number: 97931131.3
(22) Date of filing: 10.06.1997
(51) Int. Cl.: B32B 27/32, B32B 27/34

(54) **Three-layer Polyamide Film Structure**
Dreischichtfoliestrukturen aus Polyamid
Structure de complexes polyamidiques à trois couches

(30) Priority: 10.06.1996 US 19584 P; 30.05.1997 US 865945
(43) Date of publication of application: 31.03.1999
(73) Proprietor: Pliant Corporation, Schaumburg, IL 60173 (US)
(72) Inventor: TSAI, Mingliang, Lawrence, Holmdel, NJ 07733 (US); ALTMAN, Carl, Elliot, Pitman, PA 17964 (US); DEGRASSI, Alfieri, Pottsville, PA 17901 (US); MENNIG, John, Pottsville, PA 17901 (US); MESSA, Anthony, Francis, Long Valley, NJ 07853 (US)
(74) Representative: Hucker, Charlotte Jane
(86) International application number: PCT/US1997/010161
(87) International publication number: WO 1997/047468

(56) References cited:
- EP-A- 0 035 392
- EP-A- 0 334 293
- EP-A- 0 342 897
- EP-A- 0 595 220
- FR-A- 2 132 395
- JP-A- 7 148 897
- US-A- 4 058 647
- US-A- 4 361 628
- US-A- 4 444 829
- US-A- 5 114 765
- Carlowitz B.: "Kunststoff-Tabellen", 4th. ed. (1995); Carl Hanser Verlag, München; p. 2-5

## Description

The present invention relates to multilayer film structures. More particularly, the invention pertains to coextruded blown films having an one inner core layer of a polyamide homopolymer or copolymer, and an outer skin layer on each side of the polyamide core comprising a blend of an olefin containing homopolymer or copolymer and an adhesive composition which comprises a polyolefin having at least one functional moiety of an unsaturated carboxylic acid and/or anhydride thereof Such structures are suitable for use as release and barrier films for sheet molding composition applications.

### DESCRIPTION OF THE PRIOR ART

There is a significant need in a variety of industries for producing strong, durable, light weight structural parts. There is a particular desire in the automotive and aerospace industries to produce such strong, light weight structural parts for energy efficient vehicles, planes and associated apparatus. These uses require plastics strong enough and with sufficient durability to replace many commonly used metal structural support members present in such vehicles.

Reinforced plastic parts must have structural strength and integrity similar to a metal component while having reduced weight. Structural composites made from sheet molding compounds (SMC), allow rapid matched-die moldings. Typically SMCs are comprised of a mixture of an unsaturated polyester, a crosslinkable polymeric resin, chopped fiber reinforcement, and other additives. Composite materials are generally prepared by depositing the chopped fiber on a layer of a fluid resin supported on a moving film to form a matrix. Generally, such are then passed through a series of kneading and compacting rolls and may be formed into large rolls. Following an aging period of a few days, the polyester partially cures and increases in viscosity to a suitable consistency. The SMC is then used to produce molded parts by cutting a piece of SMC from a roll, peeling away the carrier film, and then placing the SMC in a heated mold for molding and complete curing.

There are similar reinforced plastic materials which are processed in a slightly different manner from SMC compositions as in well known in the art. These include thick molding compounds (TMC) and bulk molding compounds (BMC). As used hereinafter, for convenience the term "SMC" is intended to include such alternate materials.

Historically, the carrier films were formed of polyethylene, a polyolefin. Although such films had excellent release from the SMC materials, they were inherently weak which required using a relatively thick film to support the SMC material through the process. The weakness of such films increases the likelihood of carrier film breakage, which results in interruptions and down time in the production process. Importantly, such polyethylene films are extremely permeable to styrenic monomers, which are present in SMC compositions as a crosslinking agent for the polyester resin. These polyethylene films not only released styrene monomers into the atmosphere during production, but also release significant amounts during the ensuing storage periods of the SMC construction.

The release of styrene monomers into the manufacturing environment raises significant toxicity and environmental hazards. To solve this problem, one prior art technique was to form a film which is a sandwich of a polyamide core (which blocks styrene vapors) that is covered by polyethylene layers on each side. However, one problem with such a construction is that polyamides and polyolefins do not adhere well enough to each other, which obviously reduces the strength of the film.

JP-A-07148897 discloses an SMC carrier film which is a five-layer film of ABCBA structure in which A is polypropylene or ethylene/propylene random copolymer, C is a nylon resin layer and B is a resin layer having adhesiveness to both layers A and C.

One film that has had considerable commercial success is formed from a blend of a polyamide and a polyolefin having a low crystallinity. Such films are described, for example, in U.S. patent 4,444,829. This film, sold by AlliedSignal, has very good release properties, excellent styrene blocking capability and high strength. This film is, however, relatively expensive as compared to a film of polyethylene. Also, since many polyamides are hygroscopic, in high humidity conditions the film may experience reduced strength.

Efforts have also been made to improve the coextruded polyamide/polyolefin film described above. One technique is to place a tying adhesive layer on both sides of the polyamide layer and between polyolefin layers. Although these films have excellent release and styrene blocking properties, such a five layer construction complicates manufacturing and increases cost.

Therefore, there is a clear need for a film capable of cleanly releasing from SMC compounds, blocking any significant styrene monomer transmission while at the same time having high structural strength in all environments. Accordingly, it is an objective of this invention to provide a film which is useful in SMC production which is capable of releasing from SMC compounds, does not allow significant styrene monomer transmission, and which is of very high strength.

### SUMMARY OF THE INVENTION

The invention provides a multilayer film which is defined in claim 1.

The invention also provides a method for preparing a multilayer film which comprises is defined in claim 12.

The invention further provides the use of a multilayer film as defined in claim 1 suitable as a carrier web for reinforced plastics.

The foregoing is achieved by a three-layered, multipolymer release/barrier film comprising a core of a polyamide and an outer layer on each side of the polyamide core comprising a blend of a linear low density polyethylene and adhesive tie composition which comprises a one of maleic only divide modified linear low density polyethylene and maleic anhydride modified linear ultra low density polyethylene. This film allows for excellent strength, release characteristics from SMC compounds, and blocking of styrene monomer passage. The polyamide core and outer polyolefin blend films have adequate adhesion to one another such that an intermediate tie adhesive layer is unnecessary. As a result, a carrier film is achieved which is less costly, has high strength, excellent release properties and excellent styrene permeation resistance.

### DETAILED DESCRIPTION OF THE PREFERRED EMBODIMENT

In the practice of the present invention, a multilayered film is prepared which is broadly composed of a polyamide layer and a polyolefin skin layer attached on each opposite side of the polyamide layer. The polyolefin layer comprises a blend of the defined olefin containing polymer and the defined adhesive. The adhesive comprises at least one polyolefin having at least one functional moiety of an unsaturated carboxylic acid or anhydride thereof.

The polyamide layer may be comprised of polyamide homopolymer, copolymers or blends thereof. Polyamides suitable for use in this invention include aliphatic polyamides or aliphatic/aromatic polyamides. As used herein, "aliphatic polyamides" are polyamides characterized by the presence of recurring carbonamide groups as an integral part of the polymer chain which are separated from one another by at least two aliphatic carbon atoms. Illustrative of these polyamides are those having recurring monomeric units represented by the general formula: 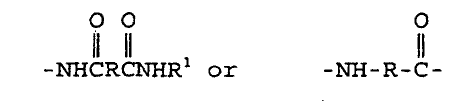 or a combination thereof in which R and R¹ are the same or different and are alkylene groups of at least about two carbon atoms, preferably alkylene groups having from about 2 to about 12 carbon atoms. As used herein, an "aliphatic/aromatic polyamide" is characterized by the presence of recurring carbonamide groups as an integral part of the polymer chain where the carbonyl moieties are separated by aliphatic moieties having at least two carbon atoms and where the nitrogen groups are separated by aromatic moieties. Illustrative of the aliphatic/aromatic polyamides are those having recurring units of the formula: 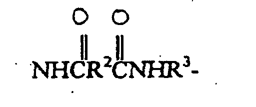 in which R² and R³ are different and are alkylene groups having at least 2 carbon atoms, preferably having from 2 to about 12 carbon atoms, or arylene, preferably substituted or unsubstituted phenylene, alkylenephenylene or dialkylenephenylene and wherein the aliphatic moieties have from 1 to about 7 carbon atoms wherein permissible substituents are alkyl, alkoxy or halo, with the proviso that when R² is arylene, R³ is alkylene and when R² is alkylene, R³ is arylene or dialkylene phenylene.

Examples of suitable aliphatic polyamides are polyamides formed by the reaction of diamines and diacids such as poly(hexamethylene adipamide) (nylon 6,6), poly(hexamethylene sebacamide) (nylon 6,10), poly(heptamethylene pimelamide) (nylon 7,7), poly(octamethylene suberamide) (nylon 8,8), poly(hexamethylene azelamide) (nylon 6,9), poly(nonamethylene azelamide) (nylon 9,9), poly(decamethylene azelamide) (nylon 10,9), and the like. Illustrative of useful aliphatic polyamides are those formed by polymerization of amino acids and derivatives thereof, as for example lactams. Useful polyamides include poly(4-aminobutyric acid) (nylon 4), poly(6-aminohexanoic acid) (nylon 6, also known as poly(caprolactam)), poly(7-aminoheptanoic acid) (nylon 7), poly(8-aminoocatanoic acid)(nylon 8), poly(9-aminononanoic acid) (nylon 9), poly(10-aminodecanoic acid) (nylon 10), poly(11-aminoundecanoic acid) (nylon 11), poly(12-aminododecanoic acid) (nylon 12) and the like. Blends of two or more aliphatic polyamides may also be employed.

Copolymers formed from recurring units of the above referenced aliphatic polyamides can be used in the fabrication of the polyamide layer. By means of illustration and not limitation, such aliphatic polyamide copolymers include caprolactam/hexamethylene adipamide copolymer (nylon 6/6,6), hexamethylene adipamide/caprolactam copolymer (nylon 6,6/6), trimethylene adipamide/hexamethylene azelaiamide copolymer (nylon trimethyl 6,2/6,2), hexamethylene adipamide/hexamethyleneazelaiamide/caprolactam copolymer (nylon 6,6/6,9/6) and the like.

Preferred polyamides for use in the practice of this invention are poly(caprolactam) and poly(hexamethylene adipamide), with poly(caprolactam) being the most preferred.

Aliphatic polyamides used in the practice of this invention may be obtained from commercial sources or prepared in accordance with known preparatory techniques. For example, poly(caprolactam) can be obtained from AlliedSignal Inc., Morristown New Jersey under the tradename CAPRON®.
The number average molecular weight of the polyamide may vary widely. Usually the aliphatic polyamide is of a "film forming molecular weight", meaning a weight that is sufficiently high to form a free standing film but sufficiently low to allow melt processing of the blend into a film. Such number average molecular weights are well known to those of skill in the film forming art and are usually at least 5,000 as determined by the formic acid viscosity (FAV) method (ASTM D-789). In this method, a solution of 11 grams of aliphatic polyamide in 100 ml of 90% formic acid at 25°C is used. In the preferred embodiments of the invention, the number average molecular weight of the aliphatic polyamide ranges between 5,000 to 100,000, and in the particularly preferred embodiments it ranges between about 10,000 to about 60,000. Most preferred are those in which the number average molecular weight of the aliphatic polyamide is from about 20,000 to about 40,000.

Exemplary of aliphatic/aromatic polyamides are poly(hexamethylene isophthalamide), poly (2,2,2-trimethyl hexamethylene terephthalamide), poly(m-xylylene adipamide) (MXD6), poly(p-xylylene adipamide), poly(hexamethylene terephthalamide), poly(dodecamethylene terephthalamide), and the like. Blends of two or more aliphatic/aromatic polyamides can also be used. The most preferred aliphatic/aromatic polyamide is poly(m-xylyene adipamide).

Aliphatic/aromatic polyamides can be prepared by known preparative techniques or can be obtained from commercial sources. The number average molecular weight of the aliphatic/aromatic polyamide may vary widely. Usually, the aliphatic/aromatic polyamide is of a "film forming molecular weight", again meaning a weight that is sufficiently high to form a free standing film and sufficiently low to allow melt processing of the blend into a film. Such number average molecular weights are well known to those of skill in the film forming art and are usually at least 5,000 as determined by the formic acid viscosity method described above. In the preferred embodiments of the invention, the number average molecular weight of the aliphatic/aromatic polyamide is from 5,000 to 100,000, and in the particularly preferred embodiments is from about 10,000 to about 60,000. Most preferred are those in which the number average molecular weight of the aliphatic/aromatic polyamide is from about 20,000 to about 40,000.

Attached on each of the two sides of the polyamide layer is a polyolefin layer. The polyolefin layer comprises a blend of at least one olefin containing polymer which is linear low density polyethylene and an adhesive or tie composition as defined above.

The polyolefins used herein are ultra low density (ULDPE) and linear low density (LLDPE).

Polyolefins such as polyethylenes are commonly differentiated based on the density which results from their numbers of chain branches per 1,000 carbon atoms in the polyethylene main chain in the molecular structure. Branches typically are C₃-C₈ olefins, and which are preferably butene, hexene or octene. For example, HDPE has very low numbers of short chain branches (less than 20 per 1,000 carbon atoms), resulting in a relatively high density, i.e. density ranges from about 0.94 gm/cc to about 0.97 g/cm³. LLDPE has more short chain branches, in the range of 20 to 60 per 1,000 carbon atoms with a density of about 0.91 to about 0.93 g/cm³. LDPE with a density of about 0.91 to about 0.93 g/cm³ has long chain branches (20-40 per 1,000 carbon atoms) instead of short chain branches in LLDPE and HDPE. ULDPE has a higher concentration of short chain branches than LLDPE and HDPE, i.e. in the range of about 80 to about 250 per 1,000 carbon atoms and has a density of from about 0.88 to about 0.91 g/cm³. Illustrative copolymer and terpolymers include copolymers and terpolymers of alpha-olefins with other olefins such as ethylene-propylene copolymers; ethylene-butene copolymers; ethylene-pentene copolymers; ethylene-hexene copolymers; and ethylene-propylene-diene copolymers (EPDM). The term polyolefin as used herein also includes acrylonitrilebutadiene-styrene (ABS) polymers, copolymers with vinyl acetate, acrylates and methacrylates and the like. The above polyolefins may be obtained by any known process. The polyolefin may have a weight average molecular weight of 1,000 to 1,000,000, and preferably 10,000 to 500,000.

In accordance with the present invention, suitable adhesives include modified polyolefin compositions composed of a polyolefin having at least one functional moiety of unsaturated polycarboxylic acids and anhydrides thereof as defined in the claims. The modified polyolefins suitable for use in this invention include compositions described in U.S. patents 3,481,910; 3,480,580; 4,612,155 and 4,751,270. In the product of the invention the adhesive comprises a maleic anhydride modified ethylene α-olefin copolymer which is also known as linear ultra low density polyethylene, or a maleic anhydride modified linear low density polyethylene. The preferred modified polyolefin composition comprises from about 0.001 and about 10 weight percent of the functional moiety, based on the total weight of the modified polyolefin. More preferably the functional moiety comprises from about 0.005 and about 5 weight percent, and most preferably from about 0.01 and about 2 weight percent. The modified polyolefin composition may also contain up to about 40 weight percent of thermoplastic elastomers and alkyl esters as described in U.S. patent 5,139,878. The most preferred adhesive is Flexomer 1373 from Union Carbide which is a 10% maleic anhydride modified copolymer of ethylene and butene.

The weight percentage of the adhesive in the polyolefin layer ranges from at about 3 % to about 80 %, preferably from about 3 % to about 25 %, more preferably from 5 % to 15 % and most preferably from 5 % to 10 % based on the weight of the polyolefin layer composition. The balance is the olefin containing polymer, except for any optional additives as described below which may be present in the polyolefin layer.

Each layer of the multilayer film structure can contain additives which are conventionally used in such films. Examples of such additives are pigments, dyes, slip additives, fillers, nucleating agents, plasticizers, lubricants, antiblocking agents, stabilizers and inhibitors of oxidation, thermal stabilizers and ultraviolet light stabilizers. Such may be present in an amount of about 10% or less based on the weight of the layer.

The multilayer films of this invention may be produced by conventional methods useful in producing multilayer films, including coextrusion and extrusion lamination techniques. In the most preferred method, the film is formed by coextrusion. Melted and plasticated streams of the polyamide and polyolefin layer materials are fed into a co-extrusion die. While in the die, the layers are juxtaposed and combined, then emerge from the die as a single multiple layer film of polymeric material. Suitable coextrusion techniques are more fully described in U.S. patents 5,139,878 and 4,677,017 except coextrusion in this invention is conducted at from about 460 °F (238 °C) to about 510 °F (266 °C). Coextrusion techniques include methods which include the use of a feed block with a standard die, a multimanifold die such as a circular die, as well as a multimanifold die such as used in forming multilayer films for forming flat cast films and cast sheets. Preferably the multilayered films are made by blown film coextrusion. The film is formed by what is known in the art as a blown film apparatus which includes a multi-manifold circular die head having concentric circular orifices. The multilayer film is formed by coextruding a molten polyamide layer through a circular die, and a molten polyolefin layer on each opposite side of the polyamide layer through additional circular dies concentric with the first circular die. Then a gas, usually air is blown through a jet which is concentric with the circular dies thereby forming a bubble expanding the polyamide and polyolefin layers. The bubble is then collapsed upon itself into a pair of attached multilayer films attached at two opposite edges. Usually the pair of attached multilayer films are then cut apart at least at one of the edges and separated into a pair of multilayer films which are then rolled up.

An unexpected advantage of the present invention is that the modified polyolefin improves the bubble stability of the blown film and also achieves an unexpectedly improved adhesion of the polyolefin film to the polyamide film. In particular, a maleic anhydride modified ethylene α-olefin, when added to unmodified polyethylene in amounts of from 5% to 10% by weight of the polyethylene produces a composition having exceptional adhesion to a film of nylon 6, and also helps maintain the bubble stability imparted by fractional melt index unmodified polyethylene. This is crucial in a multilayer blown film manufacturing process, especially in cases of thin polyolefin skins surrounding a heavy core of nylon.

An advantage of coextruded films is the formation of a multilayer film in a one process step by combining molten layers of each of the film layers of polyamide and polyolefin blend into a unitary film structure. Preferably the multilayers form an inseparable bond with one another. The term "inseparable bond" as used herein shall mean a bond strength of at least 2.70 N/cm (700 g/inch) as determined by testing the film according to the procedure set forth in ASTM D-3359-90 and F88-85.

In order to produce a multilayer film by a coextrusion process, it is necessary that the constituents used to form each of the individual films be compatible with the film extrusion process. The term "compatible" in this respect means that the film-forming compositions used to form the films have melt properties which are sufficiently similar so as to allow coextrusion. Melt properties of interest include, for example, melting points, melt flow indices, apparent viscosity, as well as melt stability. It is important that such compatibility be present to assure the production of a multilayer film having good adhesion and relatively uniform thickness across the width of the film being produced. As is known in the art, film-forming compositions which are not sufficiently compatible to be useful in a coextrusion process frequently produce films having poor interfacial lamination, poor physical properties as well as poor appearance. One skilled in the art can readily weigh the above-noted compatibility in order to select polymers having desirable physical properties and determine the optimal combination of relative properties in adjacent layers without undue experimentation. If a coextrusion process is used, it is important that the constituents used to form the multilayer film be compatible within a relatively close temperature range in order to permit extrusion through a common die. In the preferred embodiment when the polyamide has a formic acid viscosity FAV of from about 120 to about 250 by ASTM D-789 and the polyolefin layer has a melt index of from about .5 to about 3 melt index units (MI) as determined by ASTM D-1238 the films will be compatible. That is, the polyamide and polyolefin layers will flow uniformly in the coextruder.

Alternatively, the multilayer films of the present invention can be produced by lamination whereby a multilayer film structure is formed from pre-fabricated film plies by methods which are well known in the art. The basic methods used in film laminating techniques are fusion, wet combining, and heat reactivating. Fusion, which is a method of laminating two or more film plies using heat and pressure laminated are comprised of polymers that readily form interfacial adhesion. Wet combining and heat reactivating are utilized in laminating incompatible films using adhesive materials. Typically, laminating is done by positioning the individual layers of the inventive film on one another under conditions of sufficient heat and pressure to cause the layers to combine into a unitary film. Typically the polyolefin and polyamide layers are positioned on one another, and the combination is passed through the nip of a pair of heated laminating rollers by techniques well known in the art such as those described in U.S. patent 3,355,347. Lamination heating may be done at temperatures ranging from about 75°C to about 175°C, at pressures ranging from about 5 psig (0.034 MPa) to about 100 psig (0.69 MPa) for from about 5 seconds to about 5 minutes, preferably from about 30 seconds to about I minute.

The multilayer film, whether comprising a three or more layer structure, may be stretched or oriented in any desired direction using methods well known to those skilled in the art. Examples of such methods include those set forth in U. S. patent 4,510,301. Optionally, the film may be stretched uniaxially in either the direction coincident with the direction of movement of the film being withdrawn from the film forming apparatus, also referred to in the art as the "machine direction", or in as direction which is perpendicular to the machine direction, and referred to in the art as the "transverse direction", or biaxially in both the machine direction and the transverse direction. The films of the present invention have sufficient dimensional stability to be stretched at least 1.5 and preferably more than three times and more preferably from more than three times to about ten times in either the machine direction or the transverse direction or both. Typically for use in the present invention, the oriented film formed from the composition of the invention are preferably produced at draw ratios of from about 1.5:1 to about 6:1, and preferably at a draw ratio of from about 3:1 to about 4:1. The term "draw ratio" as used herein indicates the increase of dimension in the direction of the draw. Therefore, a film having a draw ratio of 2:1 has its length doubled during the drawing process. Generally, the film is drawn by passing it over a series of preheating and heating rolls. The heated film moves through a set of nip rolls downstream at a faster rate than the film entering the nip rolls at an upstream location. The change of rate is compensated for by stretching in the film.

Although each layer of the multilayer film structure may have a different thickness, the total thickness of the multilayered structure preferably ranges from about 0.3 mils (7.6 µm) to about 5.0 mils (127.0 µm) and preferably from about 0.5 mils (12.7 µm) to about 1.5 mils (37.5 µm). In the preferred embodiment, the core comprises from about 50% to about 90%, preferably from about 70 % to about 80% of the total film thickness and each exterior layer comprises from about 5% to about 25 %, preferably from about 10 % to about 15% of the total film thickness. While such thicknesses are preferred as providing a readily flexible film, it is to be understood that other film thicknesses may be produced to satisfy a particular need and yet fall within the scope of the present invention.

The films produced according to the present invention are found to have low cost, excellent strength, release characteristics from SMC compounds, and blocking of styrene monomer passage. The polyamide core and outer polyolefin blend films have adequate adhesion to one another such that an intermediate tie adhesive layer is unnecessary. The polyolefin layer also offers excellent moisture barrier properties to deter moisture from passing through to the polyamide layer. The following non-limiting examples serve to illustrate the invention.

### EXAMPLE 1

A two-extruder system is constructed of two 3.2 cm (1 1/4",) Killion single screw extruders (one with L/D=24/1, and the other with L/D=30/1). Poly(epsiloncaprolactam) (nylon 6, formic acid viscosity = 135, made by AlliedSignal Inc.) resins were fed into the extruder with L/D= 30/1 with an extrusion profile set at 232 °C, 254 °C, and 260 °C for the heating zones 1 - 3 and 260 °C for the adapters. The melt temperature was measured at 257 °C. A poly(ethylene) blend comprising an unmodified polyethylene and a modified polyethylene, for which the composition is listed below, was extruded in the extruder with L/D=24/1 with an extrusion profile set at 238 °C, 252 °C, 257 °C, and 260 °C for the heating zone 1 - 4 and 260 °C for the adapters. The melt temperature was measured at 260 °C. The extrudate, after passing through a coextrusion film die kept at 260 °C, was then cast on a roll maintained at 38 °C, followed by a cooling roll set at 35 °C. The resultant film had a thickness of 25 µm. The unmodified poly(ethylene) materials used in the poly(ethylene) blend were:
LDPE³: low density PE - density=0.919, melt index=0.65, 602AS, made by Westlake Chemical Co.
LLDPE⁴: linear low density PE - density=0.920, melt index=1, Escorene LL-3001, made by Exxon Chemical Co.
MDPE⁵: medium density PE - density=0.941, melt index=4, Dowlex 2027A, made by Dow Chemical Co.
HDPE⁶: high density PE - density=0.954, melt index=6, Paxon A55-060, made by Exxon.

The modified poly(ethylene) materials used in the poly(ethylene) blend were:
Maleic anhydride (MA) modified ethylene-butene copolymer: density=0.903, melt index=3, vicat softening temperature (ASTM D-1525): 53 ° C, Flexomer DEFA-1373, made by Union Carbide Chemical Co.
MA modified LLDPE: density=0.92, melt index=2, Vicat softening temperature (ASTM D-1525): 86° C, Admer NF500, made by Mitsui Petrochemicals, Ltd.
MA modified HDPE: density=0.95, melt index=1.3, melting temperature=136 ° C, Bynel 4003, made by Du Pont.
Ethylene-methacrylate acid ionomer: density=0.96, melt index=1, cation: Zn, Vicat softening temperature (ASTM D-1525): 71° C, Surlyn 9721, made by Du Pont.

A selected maleic anhydride modified polyethylene was pellet blended in different ratios with a selected unmodified polyethylene. The resin blend was extruded and then cast into a film as two outer skin layers with a nylon 6 core. The skin layer is about 10% on each side of the total thickness. The nylon 6 core is about 80% of the total thickness. The film was then subjected to an adhesion test using Scotch 610 tape. Scotch 610 tape, 2.54 cm (1 inch) in width, was taped to both sides of the film. The film was then subjected to peel. If the adhesion between the nylon 6 core and the poly(ethylene) blend is weak, i.e., less than 2.70 N/cm (700 gm/in), the layers can be separated. When the amount of the modified poly(ethylene) was increased, the adhesion becomes stronger. Beyond a critical level of modified poly(ethylene) in unmodified poly(ethylene), the film cannot be separated. Table 1 lists the percentage of modified poly(ethylene) in unmodified poly(ethylene) in a three layer coextruded film containing a nylon 6 core and PE skins that gives an inseparable bond strength.

**Table 1.**

| Percentage of modified polyethylene in an unmodified polyethylene of a 3-layer coextruded film for inseparable bond strength | | | | |
|---|---|---|---|---|
| | LDPE^{3,}* | LLDPE⁴ | MDPE^{5,}* | HDPE^{6,}* |
| MA¹ Modified Ethylene α-olefin Copolymer ² | 10% | 10% | 15% | 20% |
| | | | | |
| MA Modified LLDPE⁴ | 40% | 50% | 60% | 80% |
| | | | | |
| MA Modified HDPE^{6,}* | 80% | 80% | 80% | 70% |
| | | | | |
| Ethylene-Methacrylic^{7,}* Acid Ionomer | 60% | 60% | 50% | 30% |
| Notes: 1. MA: Maleic Anhydride 2. Ethylene α-olefin Copolymer: also known as linear ultra low density polyethylene 3. LDPE: Low Density Polyethylene 4. LLDPE: Linear Low Density Polyethylene 5. MDPE: Medium Density Polyethylene 6. HDPE: High Density Polyethylene 7. Ethylene-Methacrylic Acid Ionomer: also known as Surlyn® made by Du Pont | | | | |

| | | | | |
|---|---|---|---|---|
| * does not form part of the scope of the claims. | | | | |

### EXAMPLE 2 (COMPARATIVE)

A commercially available blown film coextrusion apparatus is used to produce a three layer, symmetrical film construction comprising two polyolefin in the skin (outer) layers and a polyamide in the core layer. Production rates of 136-227 kg (300-500 lbs) per hour were achieved. Film gauges were 25.4-38 µm (1-1.5mil). Melt temperatures for the polyolefin layer were 193°C (380°F) to 202°C (395°F), melt temperatures for the polyamide ranged from 238°C (460°F) to 260°C (500°F).

The composition of the skin layers was: 25% LLDPE, 25% HDPE, 50% Admer NF 500 (Mitsui)
The composition of the core layer was: 100% nylon 6.
Layer Distribution: 20% skin/60% core/20% skin by weight.
Film Gauge: 40.6 µm (1.6mil).
The film adhesion was poor. The layers can be easily separated with a tape assisted peel using Scotch #610 Tape.

### EXAMPLE 3 (COMPARATIVE)

Example 2 is repeated with the following skin and core compositions:
The composition of the skin layers: 85% LLDPE, 15% Surlyn Ionomer
The composition of the core layer: 100% nylon 6.
Layer Distribution: 15% skin/70% core/15% skin by weight
Film Gauge: 25.4 µm (1.0mil).
The film adhesion was poor. The layers can be separated without using a tape assist.

### EXAMPLE 4 (does not form part of the scope of the claims)

Example 2 is repeated with the following skin and core compositions:
The composition of the skin layers: 90% high pressure LDPE, 10% maleated polyethylene (DEFA 1373)
The composition of the core layer: 100% nylon 6.
Layer Distribution: 11.5% skin/77% core/11.5% skin
Film Gauge: 27.9 µm (1.1mil).
The film adhesion was excellent. The layers cannot be separated with tape assisted peel.

It can be seen from the foregoing that that the invention provides films having excellent adhesion properties.

## Claims

1. A three layer film suitable for use as a sheet molding compound (SMC) carrier film which is composed of one polyamide layer and two polyolefin layers, one of the polyolefin layers being attached to each side of the polyamide layer such that each polyolefin layer comprises an outer layer of the film, **characterised in that** each polyolefin layer comprises a blend of linear low density polyethylene and an adhesive, which adhesive comprises one of maleic anhydride modified linear low density. polyethylene and maleic anhydride modified linear ultra low density polyethylene.

2. The film according to claim 1 wherein the polyamide layer comprises a polyamide homopolymer, copolymers or blends thereof.

3. The film according to claim 1 wherein the polyamide layer comprises a polyamide selected from the group consisting of those having recurring monomeric units represented by the general formula: 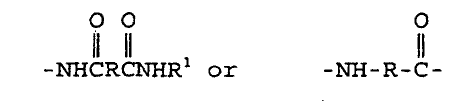 or a combination thereof in which R and R¹ are the same or different and are alkylene groups of at least about two carbon atoms, preferably alkylene groups having from about 2 to about 12 carbon atoms; and aliphatic/aromatic polyamides having recurring units of the formula: 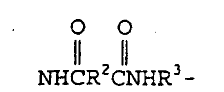 in which R² and R³ are different and are alkylene groups having at least 2 carbon atoms, or arylene wherein the aliphatic moieties have from 1 to 7 carbon atoms wherein permissible substituents are alkyl, alkoxy or halo, with the proviso that R² is arylene, R³ is alkylene and when R² is alkylene, R³ is arylene or dialkylene phenylene.

4. The film according to claim 1 wherein the polyamide layer comprises a polyamide selected from the group consisting of poly(hexamethylene adipamide), poly (hexamethylene sebacamide), poly (heptamethylene pimelamide), poly(octamethylene suberamide), poly(hexamethylene azelamide), poly(nonamethylene azelamide), poly(decamethylene azelamide), poly(4-aminobutyric acid), poly(6-aminohexanoic acid), poly(7-aminoheptanoic acid), poly(8-aminoocatanoic acid), poly(9-aminononanoic acid), poly(10-aminodecanoic acid), poly(11-aminoundecanoic acid), poly(12-aminododecanoic acid, caprolactam/ hexamethylene adipamide copolymer, hexamethylene adipamide/ caprolactam copolymer, trimethylene adipamide/hexamethylene azelaiamide copolymer, hexamethylene adipamide/hexamethyleneazelaiamide/caprolactam copolymer, poly(caprolactam), poly (hexamethylene adipamide), poly(hexamethylene isophthalamide), poly(2,2,2-trimethylhexamethylene terephthalamide), poly(m-xylylene adiparnide), poly (p-xylylene adipamide), poly(hexamethylene terephthalamide), poly (dodecamethylene terephthalamide) and mixtures thereof.

5. The film according to claim 1 wherein the number average molecular weight of the polyamide ranges from 5,000 to 100,000.

6. The film according to claim 1 wherein the linear low density polyethylene has a weight average molecular weight of 1,000 to 1,000,000.

7. The film according to claim 1 wherein the adhesive comprises from 0.001 to 10 weight percent of the maleic anhydride moiety, based on the total weight of the adhesive.

8. The film according to claim 1 wherein the amount of adhesive in the polyolefin layer ranges from 5 % to 15 % based on the weight of the polyolefin layer composition.

9. The film according to claim 1 wherein the adhesive is present in the polyolefin layer in an amount of from 5% to 10% by weight of the polyethylene; and wherein the polyamide layer comprises nylon 6.

10. The film according to claim 1 wherein the polyamide and polyolefin layers form an inseparable bond with one another, having a bond strength of at least 2.70N/cm (700 g/inch).

11. The film according to claim 1 which has been uniaxially or biaxially stretched.

12. A method for preparing a three layer film as defined in any of claims 1 to 11, which comprises:
a) coextruding a molten polyamide layer, and a molten polyolefin layer attached onto each opposite side of the polyamide layer through a coextrusion die,
b) blowing a gas through a jet concentric with the first and second circular dies thereby forming a bubble expanding the polyamide and polyolefin layers.

13. The method of claim 12 further comprising the subsequent steps of
c) uniformly collapsing the bubble to thereby form a pair of attached multilayer films attached at two opposite edges; and
d) cutting the pair of attached multilayer films at least at one of the edges.

14. The method of claim 13 comprising cutting the pair of attached multilayer films at each of the two opposite edges and separating the pair of multilayer films.

15. Use of a film as defined in any of claims 1 to 11, as a carrier web for reinforced plastics.

## Patentansprüche

1. Dreischichtfolie, welche für eine Verwendung als Trägerfolie für flächenförmige Premix-Pressmassen ("sheet molding compound"; SMC) geeignet ist, welche aus einer Polyamidschicht und zwei Polyolefinschichten gebildet wird, wobei eine der Polyolefinschichten an jeder Seite der Polyamidschicht derart angeheftet ist, dass jede Polyolefinschicht eine äußere Schicht der Folie umfasst, **dadurch gekennzeichnet, dass** jede Polyolefinschicht eine Mischung aus Polyethylen niedriger Dichte mit linearer Struktur und einem Klebstoff umfasst, welcher Klebstoff eines von mit Maleinsäureanhydrid modifiziertem Polyethylen niedriger Dichte mit linearer Struktur und von mit Maleinsäureanhydrid modifiziertem Polyethylen ultraniedriger Dichte mit linearer Struktur umfasst.

2. Folie nach Anspruch 1, wobei die Polyamidschicht ein Polyamid-Homopolymer, -Copolymere oder Mischungen davon umfasst.

3. Folie nach Anspruch 1, wobei die Polyamidechicht ein Polyamid umfasst, welches ausgewählt wird aus der Gruppe bestehend aus jenen, die Monomer-Grundeinheiten, welche durch die allgemeine Formel: 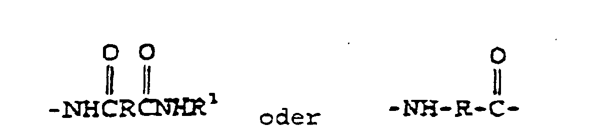 angegeben werden, oder eine Kombination davon, bei welchen R und R¹ gleich oder verschieden sind und Alkylengruppen mit wenigstens ungefähr zwei Kohlenstoffatomen, vorzugsweise Alkylengruppen mit ungefähr 2 bis ungefähr 12 Kohlenstoffatomen sind, aufweisen; und aliphatisch/aromatischen Polyamiden mit Grundeinheiten der Formel: 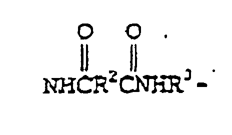 in welcher R² und R³ verschieden sind und Alkylengruppen mit wenigstens 2 Kohlenstoffatomen oder Arylen, wobei die aliphatischen Gruppierungen 1 bis 7 Kohlenstoffatome aufweisen, sind, wobei zulässige Substituenten Alkyl, Alkoxy oder Halogen sind, mit der Maßgabe, dass R² Arylen ist, R³ Alkylen ist, und wenn R² Alkylen ist, R³ Arylen oder Dialkylenphenylen ist.

4. Folie nach Anspruch 1, wobei die Polyamidschicht ein Polyamid umfasst, ausgewählt aus der Gruppe bestehend aus Poly(hexamethylenadipamid), Poly(hexamethylensebacamid), Poly(heptamethylenpimelamid), Poly(octamethylensuberamid), Poly(hexamethylenazelamid), Poly(nonamethylenazelamid), Poly(decamethylenazelamid), Poly(4-aminobuttersäure), Poly(6-aminohexansäure), Poly(7-aminoheptansäure), Poly(8-aminooctansäure), Poly(9-aminononansäure), Poly(10-aminodecansäure), Poly(11-aminoundecansäure), Poly(12-aminododecansäure), Caprolactam/Hexamethylenadipamid-Copolymer, Hexamethylenadipamid/Caprolactam-Copolymer, Trimethylenadipamid/Hexamethylenazelaiamid-Copolymer, Hexamethylenadipamid/Hexamethylenazelaiamid/Caprolactam-Copolymer, Poly(caprolactam), Poly(hexamethylenadipamid), Poly(hexamethylenisophthalamid), Poly(2,2,2-trimethylhexamethylenterephthalamid), Poly(m-xylylenadiparnid), Poly(p-xylylenadipamid), Poly(hexamethylenterephthalamid), Poly(dodecamethylenterephthalamid) und Mischungen davon.

5. Folie nach Anspruch 1, wobei das Molekulargewicht-Zahlenmittel des Polyamids von 5.000 bis 100.000 reicht.

6. Folie nach Anspruch 1, wobei das Polyethylen niedriger Dichte mit linearer Struktur eine massegemittelte Molekülmasse von 1.000 bis 1.000.000 hat.

7. Folie nach Anspruch 1, wobei der Klebstoff 0,001 bis 10 Gewichtsprozent Maleinsäureanhydrid-Gruppierungen bezogen auf das Gesamtgewicht des Klebstoffs umfasst.

8. Folie nach Anspruch 1, wobei die Klebstoffmenge in der Polyolefinschicht von 5% bis 15% bezogen auf das Gewicht der Polyolefinschicht-Zusammensetzung reicht.

9. Folie nach Anspruch 1, wobei der Klebstoff in der Polyolefinschicht in einer Menge von 5% bis 10% bezogen auf das Gewicht des Polyethylens vorhanden ist und wobei die Polyamidschicht Nylon-6 umfasst.

10. Folie nach Anspruch 1, wobei die Polyamid- und Polyolefinschichten eine untrennbare Bindung miteinander eingehen, welche eine Binde- oder Trennfestigkeit von wenigstens 2,70 N/cm (700 g/Zoll) aufweist.

11. Folie nach Anspruch 1, die monoaxial oder biaxial gestreckt worden ist.

12. Verfahren zur Herstellung einer Dreischichtfolie, wie in einem der Ansprüche 1 bis 11 definiert, welches umfasst:
a) eine geschmolzene Polyamidschicht und eine geschmolzene Polyolefinschicht, welche auf jeder der einander gegenüberliegenden Seiten der Polyamidschicht angeheftet ist, durch eine Coextrusionsdüse zu coextrudieren,
b) ein Gas durch einen mit der ersten und zweiten kreisförmigen Düse konzentrischen Strahl zu blasen, wodurch eine Blase gebildet wird, welche die Polyamid- und Polyolefinschichten dehnt.

13. Verfahren nach Anspruch 12, welches ferner die nachfolgenden Schritte umfasst,
c) die Blase gleichförmig zusammenfallen zu lassen, um dadurch ein Paar von aneinandergehefteten Mehrschichtfolien, welche an zwei gegenüberliegenden Kanten aneinandergeheftet sind, zu bilden; und
d) das Paar von aneinandergehefteten Mehrschichtfolien an wenig stens einer der Kanten auseinanderzuschneiden.

14. Verfahren nach Anspruch 13, welches umfasst, das Paar von aneinandergehefteten Mehrschichtfolien an jeder der zwei gegen überliegenden Kanten auseinander zu schneiden und das Paar von Mehrschichtfolien zu trennen.

15. Verwendung einer Folie, wie in einem der Ansprüche 1 bis 11 definiert, als Trägergewebe oder -bahn für verstärkte Kunststoffe.

## Revendications

1. Film en trois couches apte à l'utilisation comme film de support de composé à mouler en feuille (CMF), qui est constitué d'une couche de polyamide et de deux couches de polyoléfine, une des couches de polyoléfine étant fixée à chaque face de la couche de polyamide de telle sorte que chaque couche de polyoléfine représente une couche extérieure du film, **caractérisé en ce que** chaque couche de polyoléfine comprend un mélange de polyéthylène linéaire basse densité et d'un adhésif, adhésif qui comprend l'un des polymères consistant en polyéthylène linéaire basse densité modifié avec de l'anhydride maléique et polyéthylène linéaire ultra-basse densité modifié avec de l'anhydride maléique.

2. Film suivant la revendication 1, dans lequel la couche de polyamide comprend un homopolymère de polyamide, des copolymères de polyamide ou un de leurs mélanges.

3. Film suivant la revendication 1, dans lequel la couche de polyamide comprend un polyamide choisi dans le groupe consistant en ceux possédant des motifs monomères récurrents représentés par la formule générale : 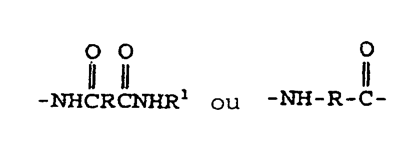 ou une de leurs associations, formule dans laquelle R et R¹ sont identiques ou différents et représentent des groupes alkylène d'au moins environ deux atomes de carbone, de préférence des groupes alkylène ayant environ 2 à environ 12 atomes de carbone ; et des polyamides aliphatiques/aromatiques possédant des motifs récurrents de formule : 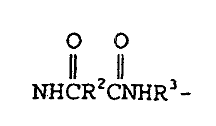 dans laquelle R² et R³ sont différents et représentent des groupes alkylène ayant au moins 2 atomes de carbone, ou des groupes arylène dans lesquels les groupements aliphatiques ont 1 à 7 atomes de carbone dans lesquels les substituants pouvant être présents sont des substituants alkyle, alkoxy ou halogéno, sous réserve que R² représente un groupe arylène, R³ représente un groupe alkylène et, lorsque R² représente un groupe alkylène, R³ représente un groupe arylène ou dialkylène-phénylène.

4. Film suivant la revendication 1, dans lequel la couche de polyamide comprend un polyamide choisi dans le groupe consistant en poly(hexaméthylène-adipamide), poly(hexaméthylène-sébacamide), poly(heptaméthylène-pimélamide), poly(octaméthylène-subéramide), poly(hexaméthylène-azélamide), poly(nonaméthylène-azélamide), poly(décaméthylène-azélamide), poly(acide 4-aminobutyrique), poly(acide 6-aminohexanoïque), poly(acide 7-aminoheptanoïque), poly(acide 8-aminooctanoïque), poly(acide 9-aminononanoïque), poly(acide 10-aminodécanoïque), poly(acide 11-amino-undécanoïque), poly(acide 12-aminododécanoique), copolymère caprolactame/hexaméthylène-adipamide, copolymère hexaméthylène-adipamide/caprolactame, copolymère triméthylène-adipamide/hexaméthylène-azélamide, copolymère hexaméthylène-adipamide/hexaméthylène-azélamide/caprolactame, poly(caprolactame), poly(hexaméthylène-adipamide), poly(hexaméthylène-isophtalamide), poly(2,2,2-triméthylhexaméthylène-téréphtalamide), poly(m-xylylène-adipamide), poly(p-xylylène-adipamide), poly(hexaméthylène-téréphtalamide), poly(dodécaméthylène-téréphtalamide) et leurs mélanges.

5. Film suivant la revendication 1, dans lequel la moyenne en nombre du poids moléculaire du polyamide est comprise dans l'intervalle de 5000 à 100 000.

6. Film suivant la revendication 1, dans lequel le polyéthylène linaire basse densité a une moyenne en poids du poids moléculaire de 1000 à 1 000 000.

7. Film suivant la revendication 1, dans lequel l'adhésif comprend 0,001 à 10 % en poids du groupement anhydride maléique, sur la base du poids total de l'adhésif.

8. Film suivant la revendication 1, dans lequel la quantité d'adhésif dans la couche de polyoléfine est comprise dans l'intervalle de 5 % à 15 % sur la base du poids de la composition de la couche de polyoléfine.

9. Film suivant la revendication 1, dans lequel l'adhésif est présent dans la couche de polyoléfine en une quantité de 5 % à 10 % en poids du polyéthylène, et dans lequel la couche de polyamide comprend le Nylon 6.

10. Film suivant la revendication 1, dans laquelle les couches de polyamide et de polyoléfine forment une liaison inséparable l'une avec l'autre, ayant une résistance de liaison d'au moins 2,70 N/cm (700 g/inch).

11. Film suivant la revendication 1, qui a été soumis à un étirage uniaxial ou biaxial.

12. Procédé pour la préparation d'un film en trois couches tel que défini dans l'une quelconque des revendications 1 à 11, qui comprend :
a) la coextrusion d'une couche de polyamide fondu, et d'une couche de polyoléfine fondue fixée sur chaque face opposée de la couche de polyamide par une filière de coextrusion,
b) le soufflage d'un gaz à travers un jet concentrique avec les première et seconde filières circulaires, en formant ainsi une bulle provoquant l'expansion des couches de polyamide et de polyoléfine.

13. Procédé suivant la revendication 12, comprenant en outre les étapes ultérieures
c) d'affaissement uniforme de la bulle pour former ainsi une paire de films multicouches fixés, qui sont fixés à deux bords opposés ; et
d) de coupe de la paire de films multicouches fixés au moins au niveau d'un des bords.

14. Procédé suivant la revendication 13, comprenant la coupe de la paire de films multicouches fixés à chacun des deux bords opposés et la séparation de la paire de films multicouches.

15. Utilisation d'un film tel que défini dans l'une quelconque des revendications 1 à 11, comme bande de support pour des matières plastiques renforcées.
